# FASCICULE DE BREVET EUROPEEN

(11) **EP 1 054 199 B1**
(45) Date de publication et mention de la délivrance du brevet: **06.05.2004**
(21) Numéro de dépôt: 00420100.0
(22) Date de dépôt: 19.05.2000
(51) Int. Cl.: F16K 31/04

(54) **Vanne motorisée pour la constitution d'un ensemble de distribution sélective d'un fluide de circulation**
Motorisiertes Ventil für eine Anordnung zur selektiven Abgabe einer zirkulierenden Flüssigkeit
Motorised valve for a selective distribution assembly for circulating fluid

(30) Priorité: 21.05.1999 FR 9906675
(43) Date de publication de la demande: 22.11.2000
(73) Titulaire: Société Anonyme de Fabrication Industrielle SAFI, 26770 Taulignan (FR)
(72) Inventeur: Moison, Jacques, 84600 Valreas (FR)
(74) Mandataire: Thibault, Jean-Marc

(56) Documents cités:
- EP-A- 0 373 090
- DE-U- 29 706 400
- FR-A- 1 372 187
- GB-A- 2 239 077
- US-A- 3 680 831
- US-A- 4 398 562

## Description

La présente invention est relative aux circuits de circulation de fluides divers et elle vise, plus particulièrement, les organes constitutifs de tels circuits pour assurer l'alimentation sélective d'appareils d'utilisation.

Dans de nombreux domaines, il est nécessaire de pouvoir assurer l'alimentation sélective d'appareils d'utilisation à partir de circuits d'alimentation propres qui sont raccordés sélectivement à un circuit de fourniture de fluide sous pression.

Le caractère spécifique d'une telle alimentation tient à la nécessité de pouvoir ou de devoir intervenir sur la sélectivité d'alimentation des circuits d'utilisation lorsqu'il est opportun, utile, nécessaire ou indispensable de pouvoir, selon les cas, commander positivement l'alimentation de certains par rapport à d'autres.

Pour résoudre un tel problème, il est généralement fait recours à l'utilisation de vannes motorisées qui sont interposées entre un circuit centralisateur commun et des circuits dérivés menant aux appareils d'alimentation.

Tel est le cas, à titre d'exemple non limitatif, de l'alimentation des différentes sections d'une rampe de pulvérisation, notamment dans le domaine agricole.

Pour faciliter l'implantation, la construction, la commande, la réparation de tels unités, il est généralement adopté une architecture constructive consistant à grouper sur un même plateau ou autre organe de support les différentes vannes motorisées correspondant aux différents circuits d'utilisation.

A cette fin, il est habituel de grouper les différentes vannes côte-à-côte, en adoptant une structure de corps de vanne telle que les corps alignés définissent ensemble un collecteur de distribution commun traversant, en relation avec chacune des vannes dont la position d'ouverture est alors commandée par un organe moteur d'asservissement propre.

Ce type de construction donne satisfaction, mais les mises en service qui ont été réalisées ont permis de prendre connaissance d'un problème inhérent au mode de construction et qui pose des difficultés lorsqu'un dysfonctionnement intervient dans la batterie de vannes côte-à-côte.

En effet, comme ces vannes sont accolées par leur corps de vanne au moyen de brides ou de colliers de bridage, dès lors qu'un dysfonctionnement intervient sur la partie de motorisation de l'une d'elles, il est nécessaire d'extraire la vanne de l'ensemble cohérent qu'elle contribue à former et, par conséquent, d'interrompre toute mise en pression préalable pour permettre une dislocation du corps collecteur de distribution en vue d'autoriser l'extraction d'un corps de vanne et le remplacement par une autre.

Or, en règle générale, la vanne proprement dit n'est pas à incriminer et le dysfonctionnement constaté est à mettre au compte de la partie d'asservissement, de commande et de pilotage de ses fonctions ouverture et fermeture.

L'objet de l'invention est justement de répondre à cette exigence en proposant une nouvelle vanne motorisée dont la conception, entre la partie vanne proprement dite et la partie de motorisation, est justement prévue pour permettre un démontage rapide, pratique du bloc d'asservissement et de commande motorisé en laissant subsister la partie vanne qui est toujours associée aux vannes parallèles avec lesquelles elle constitue l'ensemble traversant définissant le collecteur de distribution commun.

L'objet de l'invention est de rendre possible en toute sécurité un tel démontage partiel de l'une des parties constitutives d'une vanne motorisée sans qu'un tel démontage puisse se traduire par des risques d'accident dès lors que le corps de vanne reste maintenu en pression par la circulation du fluide de circulation qui continue d'alimenter, par les autres vannes, les autres circuits d'utilisation non concernés par le dysfonctionnement local constaté.

Un autre objet de l'invention est de proposer des adaptations aux vannes connues, de telle sorte que les objectifs de l'invention puissent être atteints à un prix de revient intéressant.

Un objet supplémentaire est d'offrir une vanne motorisée sur laquelle une intervention, en cas de dysfonctionnement, peut être menée par un .personnel non spécialement qualifié qui n'est pas astreint à des opérations longues, délicates et dangereuses.

Pour atteindre les objectifs ci-dessus, la vanne motorisée conforme à l'invention est du type comprenant :
- un corps de vanne associé à d'autres parallèles pour définir ensemble un collecteur de distribution commun traversant,
- un obturateur tournant sur un axe de rotation, disposé dans le corps et contrôlant la communication entre le collecteur et au moins une tubulure de sortie du corps raccordée à un circuit d'utilisation,
- un groupe motoréducteur logé dans un carter adapté, de façon amovible, sur le corps et comportant un arbre de sortie solidaire en rotation de l'obturateur,
   une telle vanne étant caractérisée en ce que :
      - le corps de vanne comporte un embout cylindrique d'adaptation, concentrique à l'axe de rotation de l'obturateur,
      - le carter comporte un manchon d'assemblage enfilé en butée sur l'embout, de manière à laisser subsister un dégagement entre le corps et le carter dans leur position adaptée,
      - le corps de vanne comporte, en relation de proximité avec l'embout, deux pattes parallèles à l'axe de rotation,
      - le carter forme deux bossages en relation de proximité avec le manchon,
      - et l'assemblage amovible, entre le corps et le carter, est assuré par des vis de fixation engagées entre les pattes et les bossages, selon une direction orthogonale à l'axe de rotation en étant accessibles par le dégagement.

Diverses autres caractéristiques ressortent de la description faite ci-dessous en référence aux dessins annexés qui montrent, à titre d'exemples non limitatifs, des formes de réalisation de l'objet de l'invention.
La **fig. 1** est une vue schématique illustrant l'application selon l'invention.
La **fig. 2** est une élévation schématique, vue suivant la ligne **II-II** de la **fig. 1** et montrant une batterie de vannes motorisées constituant, par leur association, un ensemble de distribution sélective.
La **fig. 3** est une élévation transversale prise, à plus grande échelle, selon la ligne **III-III** de la **fig. 2**.
La **fig. 4** est une vue transversale prise selon la ligne **IV-IV** de la **fig. 3**.
La **fig. 5** est une coupe-élévation prise, à plus grande échelle, selon la ligne **V-V** de la **fig. 4**.
La **fig. 6** est une coupe-élévation latérale prise selon la ligne **VI-VI** de la **fig. 5.**
La **fig. 7** est une coupe partielle montrant une variante d'adaptation.

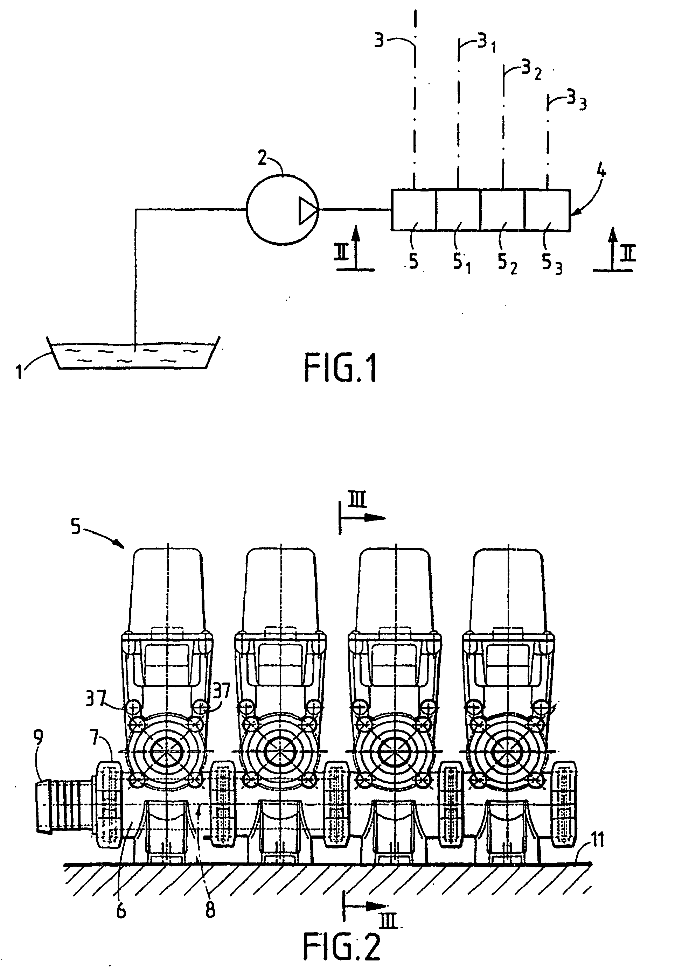

La **fig. 1** est un schéma montrant, pour illustrer le domaine technique de l'invention, une application particulière dans laquelle un fluide de circulation contenu dans une bâche ou dans un réservoir **1** est prélevé par l'intermédiaire d'une pompe **2** pour assurer l'alimentation de **n** circuits d'utilisation **3, 3**_{**1**}**, 3**_{**2**}**, 3**_{**3**} menant par exemple chacun à un segment de rampe de pulvérisation non représentée.

Pour assurer l'alimentation sélective des circuits **3 ... 3**_{**3**}**,** il est généralement fait recours à une batterie **4** de vannes motorisées **5** qui sont accolées l'une à l'autre de manière à pouvoir être alimentées de façon commune par la sortie de la pompe **2**.

Les **fig. 2** à **4** mettent en évidence un tel montage dans lequel il est prévu de mettre en oeuvre pour chaque vanne un corps **6** traversant, pourvu de brides extrêmes qui peuvent être liées par des colliers **7**, de manière à former un ensemble unitaire, en batterie, délimitant, par les corps **6**, un passage traversant **8** constituant un collecteur de distribution commun alimenté, par un raccord tel que **9**, à partir de la pompe **2**.

Des vannes telles que **5** comprennent chacune de façon plus explicite selon les fig. 2 à 4 un corps de vanne **6** qui est pourvu d'une embase **10** de fixation sur un support approprié tel que **11**.

Le corps de vanne **6** délimite un passage traversant **12** bordé de brides **13** qui peuvent être liées de façon étanche l'une à l'autre pour des vannes successives accolées telles que **5** et **5**_{**1**} par l'intermédiaire des colliers **7**. Le corps de vanne **6** délimite une chapelle **14** d'intercommunication entre le passage traversant **12** et au moins une tubulure **15** de raccordement à un circuit d'utilisation **3**. La conformation retenue pour le corps de vanne peut faire intervenir une disposition dite à deux voies ou à trois voies et dans un tel cas le corps de vanne délimite une seconde tubulure **16** qui est située en opposition de la première.

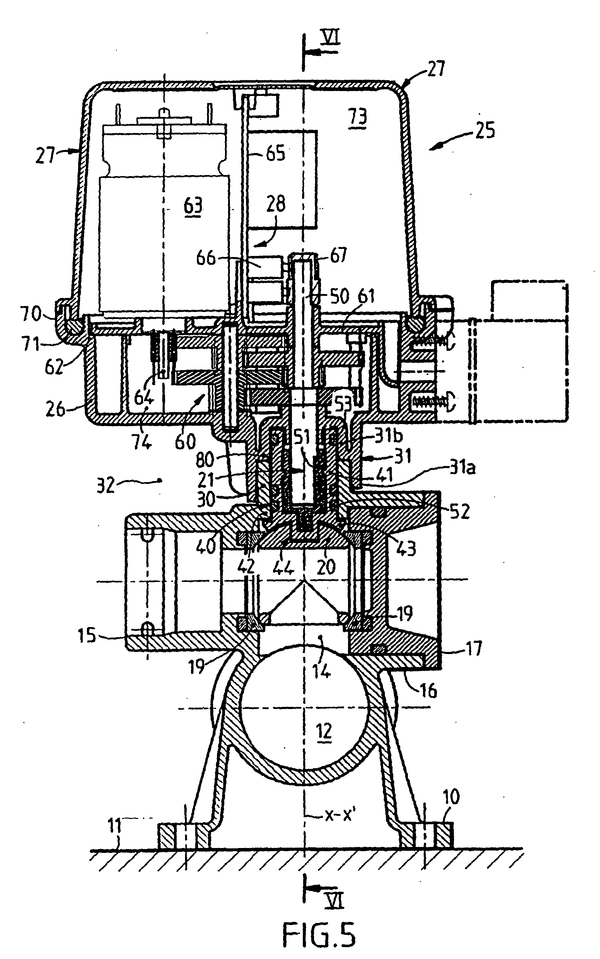

Selon la **fig. 5**, la seconde tubulure est, dans le cas présent, obturée par un bouchon **17**, mais la **fig. 7** montre que celui-ci peut être remplacé par un adaptateur **18** permettant la mise en place d'un raccord **9**_{**a**}**.**

La chapelle **14** est destinée à contenir un siège sphérique qui est constitué par deux demi-bagues **19** qui enserrent un obturateur sphérique **20** logé dans la chapelle, de manière à pouvoir tourner sur un axe **x-x'**, de préférence passant par l'axe du collecteur **8** en lui étant orthogonal. L'obturateur **20** est constitué pour être adapté à la caractéristique fonctionnelle de la vanne et peut donc être formé pour assurer une mise en communication, soit sélective entre le passage **12** et les deux tubulures **15** et **16**, soit entre l'une de ces dernières et le passage **12**.

L'obturateur sphérique **20** est destiné à être commandé en rotation sur l'axe **x-x'** par une liaison d'accouplement en rotation **21** qui est interposée entre le corps de vanne **6** et un bloc de motorisation **25** comprenant un carter **26** et un capot **27** abritant un groupe moto-réducteur **28**. Selon la technique connue, le bloc **25** est adapté de façon amovible sur le corps **6**.

Selon l'invention, pour répondre positivement au problème posé compte tenu de la caractéristique architecturale de l'ensemble de vanne **4**, il est prévu de mettre en oeuvre les moyens techniques suivants.

Tout d'abord, le corps de vanne **6** comporte un embout d'adaptation **30** définissant extérieurement une portée cylindrique qui est concentrique à l'axe **x-x'**. Ensuite, le carter **26** est pourvu d'un manchon **31** enfilable sur l'embout **30** sur lequel il est placé en appui axial de manière à laisser subsister entre le corps **6** et le carter **26** un dégagement **32** de hauteur significative en considération de la hauteur du corps **6**.

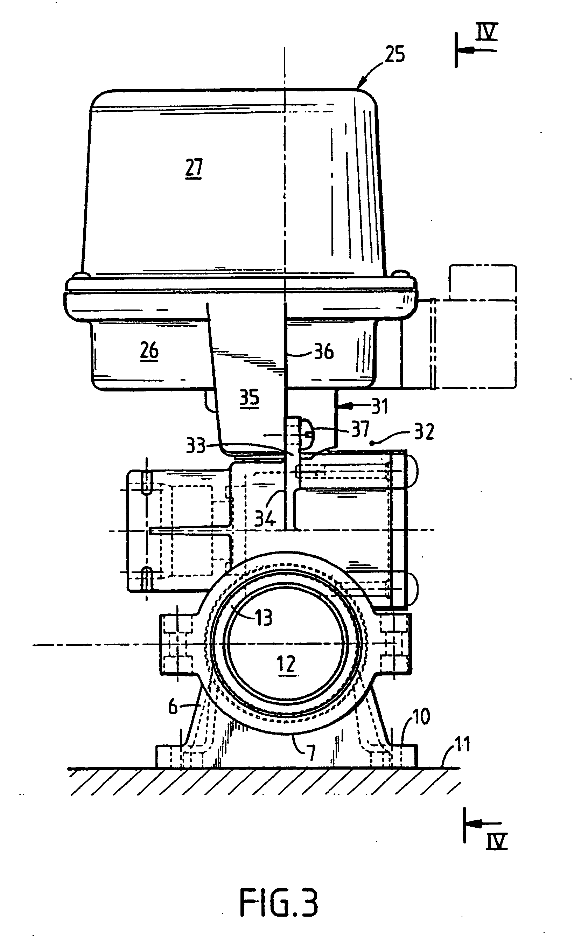

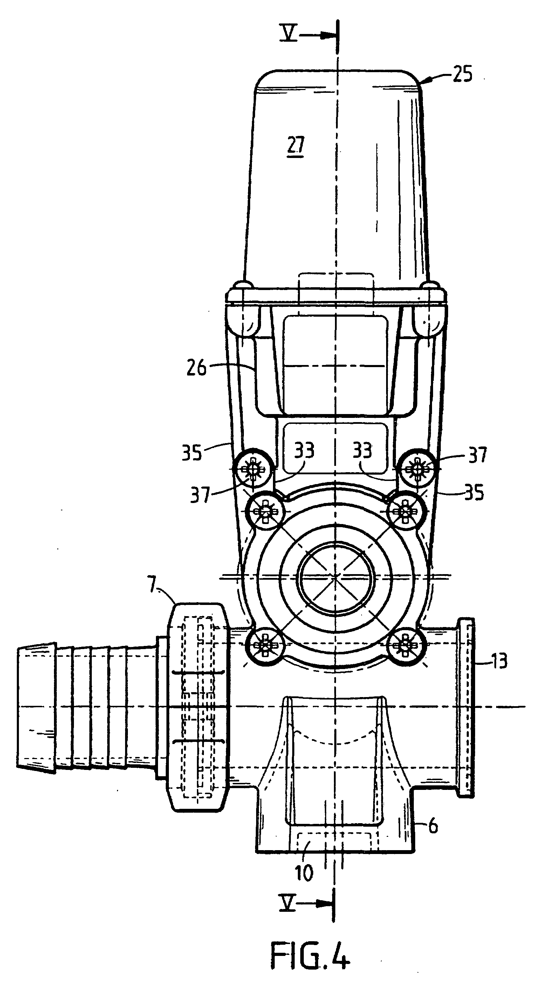

Selon une autre caractéristique, illustrée par les **fig. 3** et **4**, le corps de vanne **6** comporte deux pattes **33** qui sont formées en relation de proximité avec l'embout **30** en étant situées diamétralement opposées de part et d'autre de ce dernier Les pattes **33** sont, en outre, formées de manière à disposer de surfaces planes de glissement et d'appui **34** qui sont placées en alignement sur un diamètre passant par l'axe **x-x'**.

Parallèlement, le carter **26** du bloc **25** comporte deux bossages **35** qui sont aussi formés en relation de proximité avec le manchon **31** et qui sont disposés parallèlement en étant diamétralement opposés à ce manchon. Les bossages 35 sont aussi réalisés pour délimiter deux surfaces d'appui et de glissement **36** qui sont alignées sur un même diamètre passant par l'axe de rotation **x-x'**.

Comme cela ressort de ce qui précède et des dessins, le bloc **25** peut être assemblé sur le corps **6** par un engagement d'emboîtement du manchon **31** sur l'embout **30** en assurant la mise en coïncidence des faces **34** et **36** qui permettent le glissement et l'appui en orientation angulaire sur l'axe **x-x'**. L'assemblage est ensuite réalisé par l'intermédiaire de vis **37** qui sont engagées, à travers les pattes **33** et les bossages **35**, selon une direction orthogonale à l'axe de rotation **x-x'** en étant accessibles dans le dégagement **32**.

Ce mode constructif présente l'avantage de permettre de procéder, lorsque cela est nécessaire, au démontage du bloc **25** par intervention sur les vis **37**, directement accessibles par le dégagement **32**, même dans le cas où, par comparaison avec la **fig. 2**, plusieurs vannes **5** sont disposées côte-à-côte pour délimiter un collecteur de distribution. De cette manière, il devient possible d'extraire uniquement le bloc **25** responsable d'un dysfonctionnement sans qu'une intervention obligée soit à conduire pour désolidariser les corps de vanne côte-à-côte liés par les colliers **7**.

Si une telle possibilité est offerte dans l'objectif de l'invention, encore faut-il prendre en compte qu'une intervention, comme dit ci-dessus, est généralement conduite lorsqu'un dysfonctionnement du bloc **25** est constaté et qu'un tel dysfonctionnement intervient, majoritairement, en phase d'utilisation, c'est-à-dire lorsque le ou les circuits, et en particulier la vanne concernée sont traversées par le fluide de circulation sous pression.

On comprend que l'extraction du bloc de commande et d'asservissement **25** ne doit pas être alors, dans un tel cas, une source d'accident en raison de la pression régnant à l'intérieur du corps de vanne **6**.

Pour résoudre ce problème, il est préconisé selon l'invention de réaliser l'embout **30** de manière qu'il délimite un palier **40** concentrique à l'axe **x-x'** et réservé au montage d'un pivot **41** contribuant à constituer la liaison **21**. Le palier **40** débouche dans la chapelle **14** par l'intermédiaire d'un épaulement **42** et le pivot **41** est réalisé pour comporter à sa base une collerette **43**.

Ainsi, le pivot **41** est mis en place dans le palier **40** en étant engagé par l'intérieur de la chapelle **14**, avant le montage de l'obturateur **20**, de telle sorte qu'il puisse être amené en appui par la collerette **43** sur l'épaulement **42**.

En conséquence, même dans le cas de démontage du bloc **25**, dans un état de mise en pression du corps **6**, le fluide sous pression ne peut provoquer l'éjection du pivot **41** hors du palier **40** en raison de la coopération entre la collerette **43** et l'épaulement **42**.

A titre d'exemple, il est montré que la solidarisation en entraînement en rotation sur l'axe **x-x'** est assurée, entre le pivot **41** et l'obturateur **20** par l'intermédiaire d'un accouplement d'entraînement **44** du type à tournevis.

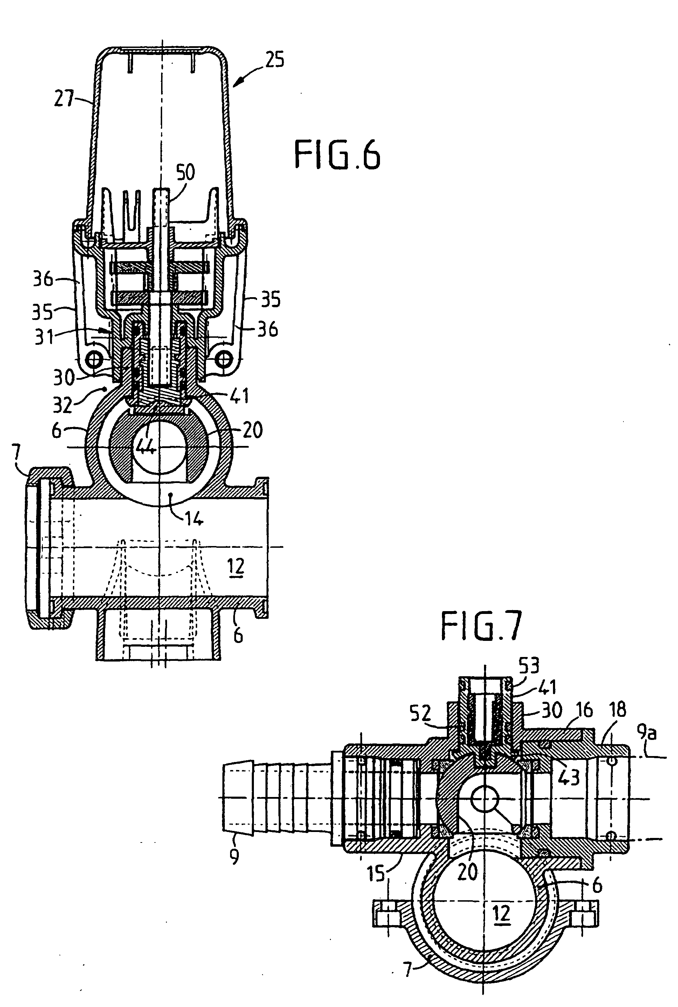

Selon une autre disposition de l'invention, il est prévu de conférer au pivot **41** une longueur axiale supérieure à celle de l'embout **30**. Cette disposition, illustrée par les **fig. 5, 6** et **7**, est choisie pour contribuer à un meilleur centrage coaxial entre le bloc **25** et le corps **6** et, à cette fin, il est prévu de réaliser le carter **26** de manière qu'il comporte un manchon d'assemblage **31** formant une première partie **31a** enfilée sur l'embout **30** et une seconde partie **31b** qui est enfilée, par la partie du pivot **41** saillant, hors de l'embout.

Par l'intermédiaire d'un double manchonnage concentrique, une liaison coaxiale précise intervient, entre le corps **6** et le carter **26**, de telle sorte qu'il est possible de compléter la liaison **21**, par un arbre de sortie **50** engagé à glissement doux à l'intérieur du pivot **41** duquel il est solidaire en rotation, par exemple par l'intermédiaire d'un méplat **51**.

Cette disposition de montage coaxiale est aussi mise à profit pour établir une étanchéité convenable entre les surfaces cylindriques en présence. Ainsi, il est prévu d'adapter, sur le pivot **41**, deux garnitures d'étanchéité **52** coopérant avec l'embout et une garniture d'étanchéité **53** coopérant avec la partie **31b** du manchon **31**.

Il peut être avantageux de ménager, entre la partie **31a** et l'embout **30**, des rainures, définissant une sorte d'araignée, qui permettent de conduire, extérieurement à l'assemblage à double manchon tel que décrit ci-dessus, les fuites de fluides qui peuvent provenir, soit du corps de vanne **6**, soit du carter **26.**

Etant donné que ces rainures débouchent extérieurement, il devient facile d'identifier quelle est la partie ou la garniture d'étanchéité qui est responsable de la fuite visuellement appréciable.

Selon une autre disposition de l'invention, le manchon **31** est formé directement par le fond du carter **26** qui est réalisé par moulage, de façon monobloc, pour délimiter les différents paliers de centrage d'un réducteur **60** faisant partie du groupe **28**. Le réducteur est, de préférence, à plusieurs étages, par exemple quatre, dont le dernier est porteur de l'arbre de sortie **50**. De façon préférée, l'arbre de sortie **50** constitue un arbre traversant principal qui est également centré dans une platine **61** adaptée sur un rebord d'appui **62** présenté par le carter **26**. La platine **61** est mise à profit pour assurer deux fonctions spécifiques. La première est celle de support d'un organe moteur **63**, tel qu'un moteur électrique faisant partie du groupe **28** et dont l'arbre de sortie **64** attaque le pignon d'entrée du premier étage du réducteur **60**. La seconde est celle de support d'une carte d'asservissement électronique **65** pourvue de contacteurs **66** qui sont commandés par l'intermédiaire de cames **67** adaptées sur l'extrémité correspondante de l'arbre de sortie **50**.

Le carter **26** est aussi réalisé pour comporter à l'extérieur de l'épaulement **26** une gorge **70** garnie d'un jonc d'étanchéité **71** à même de coopérer avec le capot **27** fermant le carter pour abriter le moteur électrique **63** et la carte **65**. De cette manière, le bloc **25** définit deux compartiments spécifiques, l'un **73** de protection du moteur et de la carte et l'autre **74** de mise en place du réducteur **60**.

Il doit être noté également que la conformation d'adaptation entre le corps **6** et le carter **26** fait intervenir le manchon **31**, dont les parties **31a** et **31b** sont réunies entre elles, de manière à délimiter ou définir intérieurement un épaulement **80** constituant une butée d'engagement axial coopérant avec le rebord de l'embout **30**.

## Revendications

1. Vanne motorisée pour la constitution d'un ensemble (**4**) de distribution sélective d'un fluide de circulation à destination de plusieurs circuits d'utilisation (**3**), vanne du type comprenant :
• un corps de vanne (**6**) associé à d'autres parallèles pour définir ensemble un collecteur de distribution commun traversant (**8**),
• un obturateur (**20**) tournant sur un axe de rotation (**x-x'**), disposé dans le corps et contrôlant la communication entre le collecteur et au moins une tubulure de sortie (**15**) du corps raccordée à un circuit d'utilisation,
• un groupe motoréducteur (**28**) logé dans un carter (**26**) adapté, de façon amovible, sur le corps et comportant un arbre de sortie (**50**) solidaire en rotation de l'obturateur,
**caractérisé en ce que** :
• le corps de vanne comporte un embout cylindrique (**30**) d'adaptation, concentrique à l'axe de rotation de l'obturateur,
• le carter comporte un manchon d'assemblage (**31**) enfilé en butée sur l'embout, de manière à laisser subsister un dégagement (**32**) entre le corps et le carter dans leur position adaptée,
• le corps de vanne comporte, en relation de proximité avec l'embout, deux pattes (**33**) parallèles à l'axe de rotation,
• le carter forme deux bossages (**35**) en relation de proximité avec le manchon,
• et l'assemblage amovible, entre le corps et le carter, est assuré par des vis de fixation engagées entre les pattes et les bossages, selon une direction orthogonale à l'axe de rotation en étant accessibles par le dégagement.

2. Vanne motorisée selon la revendication 1, **caractérisée en ce que** les pattes et les bossages sont disposés de part et d'autre de l'embout et du manchon en étant diamétralement opposés et délimitent, pour leur coopération, des faces (34 et 36) d'appui et de glissement qui sont situées sur un même diamètre passant par l'axe de rotation.

3. Vanne motorisée selon la revendication 1, **caractérisé en ce que** le corps de vanne contient, pour la manoeuvre de l'obturateur par l'arbre de sortie du groupe motoréducteur, un pivot d'accouplement (**41**) immobilisé axialement dans l'embout.

4. Vanne motorisée selon la revendication 1 ou 3, **caractérisée en ce que** :
• le corps de vanne comporte un embout (**41**) définissant, d'une part, une portée cylindrique extérieure de coopération concentrique avec le manchon et, d'autre part, un palier cylindrique concentrique s'ouvrant dans la chapelle (**14**) par un épaulement (**42**),
• le palier contient un pivot cylindrique d'accouplement entre l'arbre de sortie du groupe motoréducteur et l'obturateur, un tel pivot étant engagé dans le palier par l'intérieur de la chapelle, en butée axiale contre l'épaulement par une collerette (**43**) qu'il forme.

5. Vanne motorisée selon la revendication 4, **caractérisée en ce que** le pivot présente une longueur axiale supérieure à celle du palier de l'embout et **en ce que** le manchon (**31**) délimite deux parties d'assemblage coaxiales (**31a** et **31b**) raccordées intérieurement par un épaulement de butée axiale (**80**) coopérant avec l'embout, l'une des parties étant enfilée sur ledit embout alors que la seconde est enfilée sur le pivot.

6. Vanne motorisée selon la revendication 5, **caractérisée en ce que** le pivot porte des garnitures d'étanchéité (**52, 53**), respectivement avec le palier de l'embout et avec la partie du manchon lui correspondant.

7. Vanne motorisée selon la revendication 6, **caractérisé en ce que** le pivot est emboîté dans la seconde partie du manchon dont la première partie, entourant la portée de l'embout, est pourvue de rainures assurant un circuit de fuite.

8. Vanne motorisée selon l'une des revendication 1 à 7, **caractérisée en ce qu'**elle comprend un embout cylindrique emboîté dans un manchon formé par un carter monobloc (**26**) obtenu par montage et abritant le réducteur (**60**) du groupe (**28**).

9. Vanne motorisée selon la revendication 8, **caractérisé en ce que** le carter monobloc (**26**) offre des paliers de centrage des axes du réducteur et forme en retrait de son bord supérieur un épaulement d'appui (**62**) pour une platine (**61**) contribuant au centrage desdits axes.

10. Vanne motorisée selon la revendication 9, **caractérisée en ce que** la platine (**61**) délimite, avec le carter, un compartiment (**74**) abritant le réducteur et **en ce qu'**elle assure le support, d'une part, du moteur (**63**) d'entraînement du réducteur et, d'autre part, d'une carte électronique (**65**) d'asservissement pilotée par l'intermédiaire de cames (**67**) équipant l'arbre de sortie du réducteur.

11. Vanne motorisée selon la revendication 10, **caractérisée en ce que** la platine est disposée en appui et en retrait de la gorge présentée par le carter, contenant un cordon d'étanchéité (**70**) et sur laquelle prend appui un capot (**27**) fermant le carter protégeant le moteur et assurant le centrage de la carte.

## Patentansprüche

1. Motorisiertes Ventil zur Bildung einer selektiven Verteilungseinheit (4) für ein Zirkulationsfluid zu mehreren Verwendungsschaltungen (3), wobei das Ventil umfasst:
- einen Ventilkörper (6), der mit weiteren Ventilkörpern parallel geschaltet ist, um eine gemeinsame durchgängige Verteilungssammelleitung (8) zu definieren,
- eine Verschlussvorrichtung (20), die sich auf einer Drehachse (x-x') dreht, die in dem Körper angeordnet ist und die Verbindung zwischen der Sammelleitung und mindestens einer Ausgangsrohrleitung (15) des an eine Verwendungsschaltung angeschlossenen Körpers kontrolliert,
- eine Getriebemotorgruppe (28), die in einem Gehäuse (26) angeordnet ist, das abnehmbar auf dem Körper vorgesehen ist und eine Ausgangswelle (50) umfasst, die drehfest mit der Verschlussvorrichtung verbunden ist,
**dadurch gekennzeichnet, dass**
- der Ventilkörper einen zylindrischen Adaptionsansatz (30) umfasst, der zur Drehachse der Verschlussvorrichtung konzentrisch ist,
- das Gehäuse eine Montagehülse (31) umfasst, die am Anschlag derart über den Ansatz geschoben ist, dass ein Freiraum (32) zwischen dem Körper und dem Gehäuse in ihrer angepassten Position gelassen wird,
- der Ventilkörper in der Nähe des Ansatzes zwei zur Drehachse parallele Befestigungseisen (33) umfasst,
- das Gehäuse zwei Buckel (35) in der Nähe der Hülse umfasst,
- und die abnehmbare Befestigung zwischen dem Körper und dem Gehäuse durch Befestigungsschrauben sicher gestellt ist, die zwischen den Befestigungseisen und den Buckeln entlang einer Richtung orthogonal zur Drehrichtung eingreifen und durch Losschrauben zugänglich sind.

2. Motorisiertes Ventil nach Anspruch 1, **dadurch gekennzeichnet, dass** die Befestigungseisen und die Buckel beiderseits des Ansatzes und der Hülse angeordnet sind, indem sie einander diametral gegenüber liegen und durch ihr Zusammenwirken Stütz- und Gleitflächen (34 und 36) begrenzen, die sich auf einem selben Durchmesser befinden, der durch die Drehachse hindurch verläuft.

3. Motorisiertes Ventil nach Anspruch 1, **dadurch gekennzeichnet, dass** der Ventilkörper für die Betätigung der Verschlussvorrichtung durch die Ausgangswelle der Getriebemotorgruppe einen Kupplungszapfen (41) umfasst, der axial in dem Ansatz festgestellt ist.

4. Motorisiertes Ventil nach Anspruch 1 oder 3, **dadurch gekennzeichnet, dass**:
- der Ventilkörper einen Ansatz (41) umfasst, der einerseits einen äußeren zylindrischen Bereich für das konzentrische Zusammenwirken mit der Hülse und andererseits eine konzentrische zylindrische Lagerung definiert, die sich in dem Korb (14) durch einen Absatz (42) öffnet,
- die Lagerung einen zylindrischen Kupplungszapfen zwischen der Ausgangswelle der Getriebemotorgruppe und der Verschlussvorrichtung enthält, wobei ein solcher Zapfen in die Lagerung über das Innere des Korbes am Axialanschlag gegen den Absatz durch einen Kragen (43), den er bildet, eingreift.

5. Motorisiertes Ventil nach Anspruch 4, **dadurch gekennzeichnet, dass** der Zapfen eine größere Axiallänge als die Lagerung des Ansatzes aufweist und dass die Hülse (31) zwei koaxiale Montageteile (31a und 31b) begrenzt, die innen durch einen Axialanschlagabsatz (80) verbunden sind, der mit dem Ansatz zusammenwirkt, wobei einer der Teile auf den Ansatz geschoben ist, während der zweite auf den Zapfen geschoben ist.

6. Motorisiertes Ventil nach Anspruch 5, **dadurch gekennzeichnet, dass** der Zapfen Dichtungen (52, 53) mit der Lagerung des Ansatzes bzw. mit dem ihm entsprechenden Teil der Hülse trägt.

7. Motorisiertes Ventil nach Anspruch 6, **dadurch gekennzeichnet, dass** der Zapfen in den zweiten Teil der Hülse eingesteckt ist, deren erster Teil, der die Weite des Ansatzes umgibt, mit Nuten versehen ist, die einen Leckagekreis sicher stellen.

8. Motorisiertes Ventil nach einem der Ansprüche 1 bis 7, **dadurch gekennzeichnet, dass** es einen zylindrischen Ansatz umfasst, der in eine Hülse eingesteckt ist, die von einem einstückigen Gehäuse (26) gebildet ist, das durch Montage erhalten wird und den Getriebemotor (60) der Gruppe (28) abdeckt.

9. Motorisiertes Ventil nach Anspruch 8, **dadurch gekennzeichnet, dass** das einstückige Gehäuse (26) Zentrierlagerungen für die Achsen des Getriebemotors bietet und von seinem oberen Rand rückspringend einen Stützabsatz (62) für eine Platte (63) bildet, die zur Zentrierung der Achsen beiträgt.

10. Motorisiertes Ventil nach Anspruch 9, **dadurch gekennzeichnet, dass** die Platte (61) mit dem Gehäuse eine Abteilung (74) bildet, die den Getriebemotor abdeckt, und dass sie einerseits die Unterstützung des Antriebsmotors (63) des Getriebemotors und andererseits einer elektronischen Steuerkarte (65) sicher stellt, die mit Hilfe von Nocken (67), mit denen die Ausgangswelle des Getriebemotors versehen ist, angetrieben wird.

11. Motorisiertes Ventil nach Anspruch 10, **dadurch gekennzeichnet, dass** die Platte unterstützend und rückspringend zu der Rille angeordnet ist, die das Gehäuse aufweist und die eine Dichtungsschnur (70) aufweist und auf der eine Kappe (27) aufliegt, die das Gehäuse, das den Motor schützt, verschließt und die Zentrierung der Karte sicher stellt.

## Claims

1. Motorized valve to form a selective distribution assembly (4) for a circulating fluid intended for several service circuits (3), valve of the type comprising:
• a valve body (6) associated with other parallels for defining together a common cross-connecting distribution collector (8),
• an obturator (20) rotating on a rotation axis (x-x') arranged in the body and controlling communication between the collector and at least one outlet tubing (15) of the body connected to a service circuit,
• a gear motor unit (28) housed in a housing (26) adapted removable fashion onto the body and comprising an output shaft (50) integral in rotation with the obturator,
**characterized in that**:
• the body of the valve comprises a cylindrical adaptor end (30) concentric with the rotation axis of the obturator,
• the housing comprises an assembly sleeve (31) fitted over the end part to stop position so as to leave a clearance subsisting (32) between the body and the housing in their adapted position,
• the body of the valve, proximal with the end part, has two lugs (33) parallel to the axis of rotation,
• the housing forms two bosses (35) proximal with the sleeve
• and the removable assembly, between the body and the housing, is assured by fixation screws driven between the lugs and the bosses in orthogonal direction to the rotation axis and being accessible through the clearance.

2. Motorized valve as in claim 1, **characterized in that** the lugs and bosses are arranged either side of the end part and the sleeve being diametrically opposite and, through their cooperation, delimit bearing and sliding faces (34 and 36) located over one same diameter passing through the axis of rotation.

3. Motorized valve as in claim 1, **characterized in that** the valve body, for manoeuvring the obturator with the output shaft of the gear motor unit, comprises a coupling pivot pin (41) axially immobilized in the end part.

4. Motorized valve as in claim 1 or 3, **characterized in that**:
• the valve body comprises an end part (41) defining firstly an outer cylindrical working surface for concentric cooperation with the sleeve, and secondly a concentric cylindrical bearing opening into the cage (14) via a shoulder (42).
• the bearing contains a cylindrical coupling pivot pin between the output shaft of the gear motor unit and the obturator, said pivot fitting into the bearing via through the inside of the cage, in axial bearing against the shoulder via a flange (43) which it forms.

5. Motorized valve as in claim 4, **characterized in that** the axial length of the pivot is greater than that of the end part bearing and **in that** the sleeve (31) delimits two coaxial assembly parts (31a and 31b) connected on the inside by an axial bearing shoulder (80) cooperating with the end part, one of the parts fitting over said end part whereas the second fits over the pivot.

6. Motorized valve as in claim 5, **characterized in that** the pivot carries packing seals (52, 53) respectively with the end part bearing and with the corresponding part of the sleeve.

7. Motorized valve as in claim 6, **characterized in that** pivot is fitted into the second part of the sleeve whose first part, surrounding the working surface of the end part, is provided with grooves ensuring an escape circuit.

8. Motorized valve as in any of claims 1 to 7, **characterized in that** it comprises a cylindrical end part fitted into a sleeve formed by a one-piece housing (26) obtained by assembly and housing the gear reducer (60) of the motor unit (28).

9. Motorized valve as in claim 8, **characterized in that** the one-piece housing (26) offers alignment plateaux for the gear reducer axes and, set back from its upper edge, forms a supporting shoulder (62) for a bedplate (61) contributing towards the alignment of said axes.

10. Motorized valve as in claim 9, **characterized in that** the bedplate (61), with the housing, delimits a compartment (74) housing the gear reducer and **in that** it provides support firstly to the driving motor (63) of the gear reducer and secondly to an electronic servo-control card piloted via cams (67) fitted to the output shaft of the gear reducer.

11. Motorized valve as in claim 10, **characterized in that** the bedplate is arranged so that its support is set back from the groove offered by the housing, containing a gasket (70), on which a cover (27) bears upon to close the housing protecting the motor and ensuring alignment of the card.
